# EUROPEAN PATENT APPLICATION

(11) **EP 4 250 225 A2**
(43) Date of publication of application: **27.09.2023**
(21) Application number: 23158437.6
(22) Date of filing: 24.02.2023
(51) Int. Cl.: G06T 7/00

(54) **POINT CLOUD-DEFINED BOUNDARY**

(30) Priority: 01.03.2022 US 202263315312 P
(71) Applicant: Faro Technologies, Inc., Lake Mary, FL 32746-6204 (US)
(72) Inventor: Chan, John, Westmount, Québec, H3Z1T3 (CA); Schmidt, Michael, 70825 Korntal-Münchingen (DE)
(74) Representative: Müller Schupfner & Partner Patent- und Rechtsanwaltspartnerschaft mbB

(57) **Abstract**

Examples described herein provide a method that includes receiving three-dimensional (3D) data of an object in an environment. The method further includes generating the point cloud-defined boundary around the object based at least in part on the 3D data.

## Description

### CROSS-REFERENCE TO RELATED APPLICATIONS

The present application is a nonprovisional application of, and claims the benefit of, United States Provisional Application 63/315,312 filed on March 1, 2022, the contents of which is incorporated by reference herein.

### BACKGROUND

The subject matter disclosed herein relates to use of a device for capturing three-dimensional (3D) data. Examples of such devices for capturing 3D data include a 3D coordinate measurement device (such as a 3D laser scanner time-of-flight (TOF) coordinate measurement device, a light detection and ranging (LIDAR) device, etc.), a mobile mapping device, and/or the like, including combinations and/or multiples thereof. A 3D laser scanner device steers a beam of light to a non-cooperative target such as a diffusely scattering surface of an object. A distance meter in the device measures a distance to the object, and angular encoders measure the angles of rotation of two axles in the device. The measured distance and two angles enable a processor in the device to determine the 3D coordinates of the target.

A TOF laser scanner is a scanner in which the distance to a target point is determined based on the speed of light in air between the scanner and a target point. Laser scanners are typically used for scanning closed or open spaces such as interior areas of buildings, industrial installations and tunnels. They may also be used, for example, in industrial applications and accident reconstruction applications. A laser scanner optically scans and measures objects in a volume around the scanner through the acquisition of data points representing object surfaces within the volume. Such data points are obtained by transmitting a beam of light onto the objects and collecting the reflected or scattered light to determine the distance, two-angles (i.e., an azimuth and a zenith angle), and optionally a gray-scale value. This raw scan data is collected, stored and sent to a processor or processors to generate a 3D image representing the scanned area or object.

Generating an image requires at least three values for each data point. These three values may include the distance and two angles, or may be transformed values, such as the x, y, z coordinates. In an embodiment, an image is also based on a fourth gray-scale value, which is a value related to irradiance of scattered light returning to the scanner.

Most TOF scanners direct the beam of light within the measurement volume by steering the light with a beam steering mechanism. The beam steering mechanism includes a first motor that steers the beam of light about a first axis by a first angle that is measured by a first angular encoder (or another angle transducer). The beam steering mechanism also includes a second motor that steers the beam of light about a second axis by a second angle that is measured by a second angular encoder (or another angle transducer).

Many contemporary laser scanners include a camera mounted on the laser scanner for gathering camera digital images of the environment and for presenting the camera digital images to an operator of the laser scanner. By viewing the camera images, the operator of the scanner can determine the field of view of the measured volume and adjust settings on the laser scanner to measure over a larger or smaller region of space. In addition, the camera digital images may be transmitted to a processor to add color to the scanner image. To generate a color scanner image, at least three positional coordinates (such as x, y, z) and three color values (such as red, green, blue "RGB") are collected for each data point.

Accordingly, while existing 3D scanners are suitable for their intended purposes, what is needed is a 3D scanner having certain features of embodiments described herein.

### BRIEF DESCRIPTION

In one exemplary embodiment, a method is provided. The method includes receiving three-dimensional (3D) data of an object in an environment. The method further includes generating the point cloud-defined boundary around the object based at least in part on the 3D data.

In addition to one or more of the features described herein, or as an alternative, further embodiments of the method may include that receiving the 3D data of the object includes capturing the 3D data.

In addition to one or more of the features described herein, or as an alternative, further embodiments of the method may include that capturing the 3D data is performed using a 3D coordinate measurement device.

In addition to one or more of the features described herein, or as an alternative, further embodiments of the method may include that the 3D coordinate measurement device is a laser scanner.

In addition to one or more of the features described herein, or as an alternative, further embodiments of the method may include that capturing the 3D data of the object includes capturing first 3D data of the object at a first location within the environment and capturing second 3D data of the object at a second location within the environment.

In addition to one or more of the features described herein, or as an alternative, further embodiments of the method may include validating the first 3D data prior to capturing the second 3D data.

In addition to one or more of the features described herein, or as an alternative, further embodiments of the method may include combining the first 3D data and the second 3D data to generate the 3D data of the object.

In addition to one or more of the features described herein, or as an alternative, further embodiments of the method may include removing any duplicate data from the 3D data based at least in part on the first 3D data and the second 3D data.

In addition to one or more of the features described herein, or as an alternative, further embodiments of the method may include that capturing the 3D data includes capturing, using a first 3D coordinate measurement device, first 3D data of the object at a first location within the environment and capturing, using a second 3D coordinate measurement device, second 3D data of the object at a second location within the environment.

In addition to one or more of the features described herein, or as an alternative, further embodiments of the method may include combining the first 3D data and the second 3D data to generate the 3D data of the object.

In addition to one or more of the features described herein, or as an alternative, further embodiments of the method may include validating the 3D data prior to generating the point cloud-defined boundary.

In addition to one or more of the features described herein, or as an alternative, further embodiments of the method may include that generating the point cloud-defined boundary is further based at least in part on reference 3D data.

In addition to one or more of the features described herein, or as an alternative, further embodiments of the method may include that generating the point cloud-defined boundary around the object includes: defining a first subset of the 3D data as being associated with the object; and defining a second subset of the 3D data as being associated with the environment other than the object, wherein the point cloud-defined boundary is defined by including the first subset of the 3D data and excluding the second subset of the 3D data.

In addition to one or more of the features described herein, or as an alternative, further embodiments of the method may include that defining the first subset of the 3D data and defining the second subset of the 3D data includes: applying clipping box to create surfaces that surround the object to isolate 3D data relating to the object; subsequent to isolating 3D data relating to the object, performing a reduce point cloud operation on the 3D data relating to the object to decrease point counts without sacrificing accuracy; and generating the point cloud-defined boundary based on results of performing the reduce point operation on the 3D data relating to the object.

In addition to one or more of the features described herein, or as an alternative, further embodiments of the method may include that the surfaces are planes.

In addition to one or more of the features described herein, or as an alternative, further embodiments of the method may include that the reduce point cloud operation to decrease point counts is based at least in part on a distance threshold between points.

In addition to one or more of the features described herein, or as an alternative, further embodiments of the method may include that, prior to generating the point cloud-defined boundary, defining a point cloud based at least in part on the 3D data, wherein the point cloud-defined boundary is a threshold distance away from points of the point cloud.

In addition to one or more of the features described herein, or as an alternative, further embodiments of the method may include causing a device in the environment to be controlled based at least in part on the point cloud-defined boundary, wherein the device is prevented from passing the point cloud-defined boundary.

In another exemplary embodiment a system includes a first three-dimensional (3D) coordinate measurement device to capture, at a first location of an environment, first 3D data of an object in the environment. The system further includes a second 3D coordinate measurement device to capture, at a second location of the environment, second 3D data of the object in the environment. The system further includes a processing system that includes a memory having computer readable instructions. The processing system further includes a processing device for executing the computer readable instructions, the computer readable instructions controlling the processing device to perform operations. The operations include generating a point cloud of the object based at least in part on the first 3D data and the second 3D data. The operations further include generating a point cloud-defined boundary around the object based at least in part on the point cloud.

In addition to one or more of the features described herein, or as an alternative, further embodiments of the system may include, that the operations further include, prior to generating the point cloud of the object, removing duplicate data from at least one of the first 3D data or the second 3D data based at least in part on a comparison to the other of the first 3D data or the second 3D data.

In addition to one or more of the features described herein, or as an alternative, further embodiments of the system may include that the operations further include comparing the point cloud to a reference point cloud, and updating the point cloud based at least in part on the reference point cloud.

In addition to one or more of the features described herein, or as an alternative, further embodiments of the system may include that the operations further include causing a device to be controlled in the environment based at least in part on the point cloud-defined boundary, wherein the device is prevented from passing the point cloud-defined boundary.

The above features and advantages, and other features and advantages, of the disclosure are readily apparent from the following detailed description when taken in connection with the accompanying drawings.

### BRIEF DESCRIPTION OF DRAWINGS

The subject matter, which is regarded as the disclosure, is particularly pointed out and distinctly claimed in the claims at the conclusion of the specification. The foregoing and other features, and advantages of the disclosure are apparent from the following detailed description taken in conjunction with the accompanying drawings in which:
FIG. 1 is a perspective view of a laser scanner according to one or more embodiments described herein;
FIG. 2 is a side view of the laser scanner illustrating a method of measurement according to one or more embodiments described herein;
FIG. 3 is a schematic illustration of the optical, mechanical, and electrical components of the laser scanner according to one or more embodiments described herein;
FIG. 4 is a schematic illustration of the laser scanner of FIG. 1 according to one or more embodiments described herein;
FIG. 5 is a schematic illustration of a processing system for generating a point cloud-defined boundary according to one or more embodiments described herein;
FIG. 6A is a schematic illustration of an environment having an object to be scanned according to one or more embodiments described herein;
FIG. 6B is a schematic illustration of an environment having an object to be scanned according to one or more embodiments described herein;
FIG. 7 is a flow diagram of a method for generating a point cloud-defined boundary according to one or more embodiments described herein; and
FIG. 8 is a schematic illustration of a processing system for implementing the presently described techniques according to one or more embodiments described herein.

The detailed description explains embodiments of the disclosure, together with advantages and features, by way of example with reference to the drawings.

### DETAILED DESCRIPTION

Embodiments described herein provide for generating a point cloud-defined boundary.

In environments such as warehouses, factories, manufacturing facilities, maintenance/utility facilities, and/or the like, machines may be used to operate on and/or provide access to an object of interest (or simply, "object"). Nonlimiting examples of objects include spacecraft, ships, boats, aircraft, cars, trucks, trailers, vans, locomotives, train cars, busses, and/or the like, including combinations thereof. For example, an object may be taken to a particular environment, such as a maintenance facility, to perform maintenance, such as to paint the object or perform some task (e.g., maintenance or service) on the object. As an example, a spacecraft can be taken into a hanger, high bay, or other suitable structure for maintenance, such as to service the spacecraft, paint the spacecraft, etc. Such structure often includes equipment, machines, devices, etc., that are used to operate on and/or provide access to the object. For example, a gantry crane can be implemented in the structure to move other devices and/or people relative to the spacecraft. Other devices, such as forklifts, scissor lifts, scaffolding, etc. can be used within the structure and in proximity to the spacecraft. In such cases, if such a device comes into contact with the spacecraft, the device could cause damage to the spacecraft, the device, the structure, other devices/objects/structures, and/or people.

It is desirable to prevent damage to such objects of interest by devices that may be used to operate on, service, maintain, or otherwise operate on or in proximity to the object. Conventional techniques for object avoidance rely on manual control of devices near the object and/or laser guidance systems to control the devices. However, such approaches are deficient for adequately protecting objects from nearby devices because of errors and/or accuracy issues.

Accordingly, one or more embodiments described herein provide for a point cloud-defined boundary around the object of interest to prevent nearby devices from colliding with the object. Particularly, one or more embodiments described herein relate to scanning an object within an environment and generating a point cloud based on the scan(s). A boundary, based on the point cloud, can then be established at, or extending from, a surface of the object that acts as a boundary to keep other devices from entering an area/volume defined by the boundary.

Three-dimensional (3D) coordinate measurement devices, such as laser scanners, can be used to captured 3D data about an environment. The 3D data can be used in various ways and/or presented on a device, such as a smartphone, tablet, heads-up display, etc., as a graphical representation. For example, the 3D data can be used to generate a point cloud-defined boundary that is used to prevent collisions between devices operating near an object of interest and the object itself.

The techniques described herein provide one or more advantages over the prior art. For example, one or more embodiments described herein improve control of devices (e.g., machinery, automated guided vehicles, cranes, scissor lifts, etc.) in an environment to avoid colliding with an object of interest. One or more embodiments described herein can generate a point cloud-defined boundary based on 3D data, such as data captured by a 3D coordinate measurement device and then use the point cloud-defined boundary as a "no-go" zone around an object of interest. The point cloud-defined boundary is used to control one or more devices in the environment in proximity to the object of interest.

One or more embodiments described herein utilize 3D coordinate measurement devices, which may include, for example, a laser scanner. It should be appreciated that while embodiments herein describe the 3D coordinate measurement device as being a laser scanner, this is for example purposes and the claims should not be so limited. In other embodiments, the 3D coordinate measurement device may be another type of system that measures a plurality of points on surfaces (i.e., generates a point cloud), such as but not limited to a triangulation scanner, a structured light scanner, or a photogrammetry device for example. An example of a laser scanner is now described.

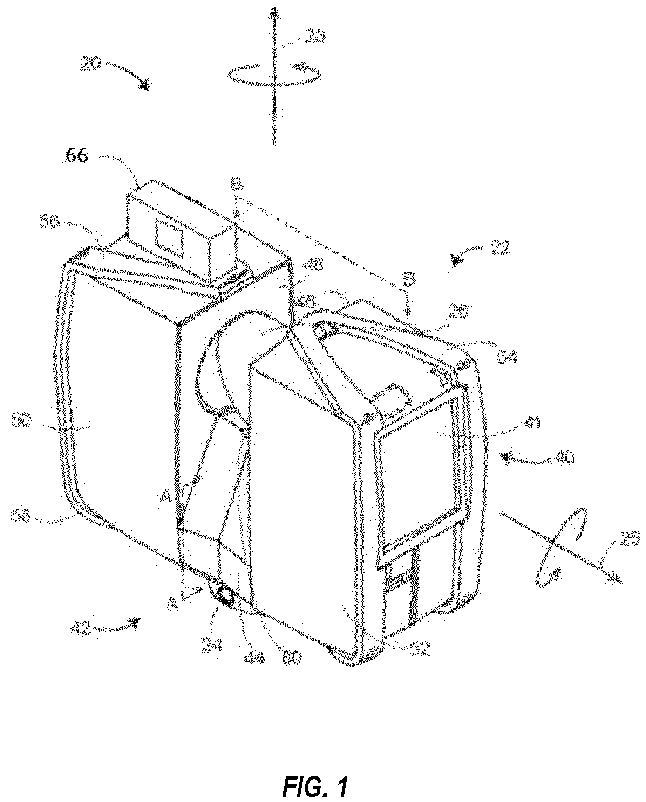

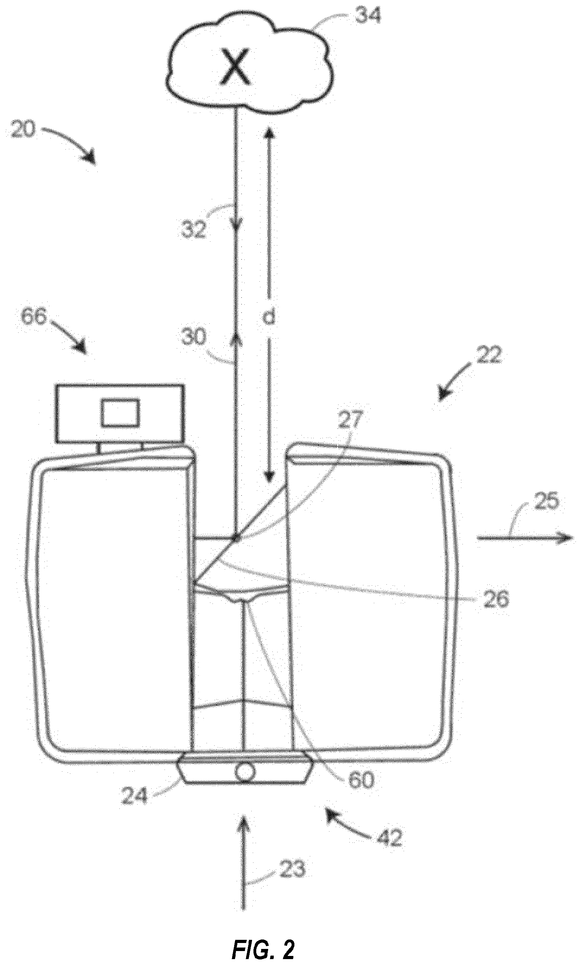

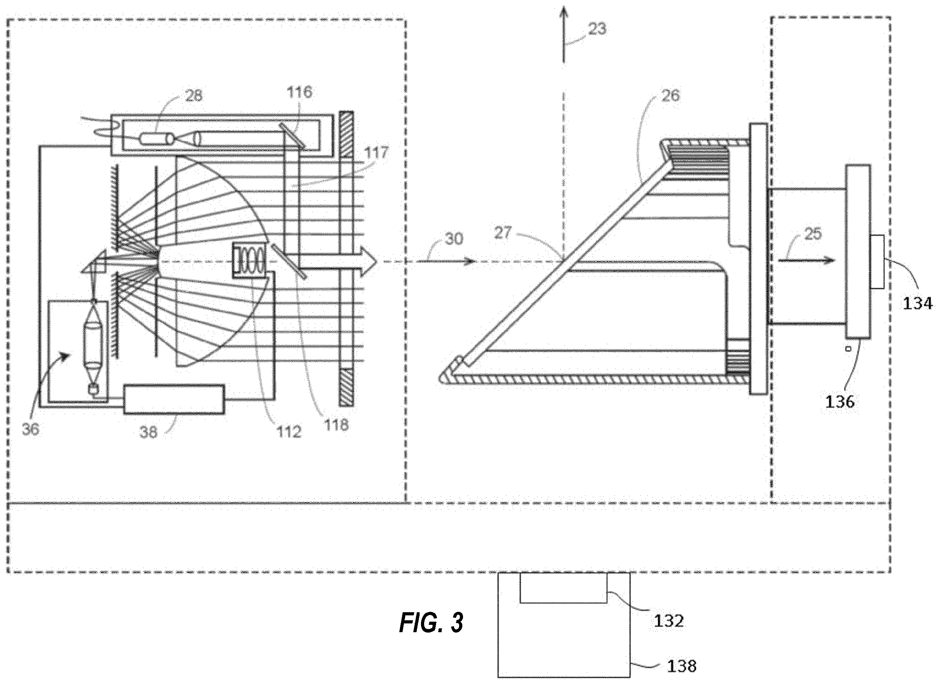

Particularly, referring now to FIGS. 1-3, a 3D coordinate measurement device, such as a laser scanner 20, is shown for optically scanning and measuring the environment surrounding the laser scanner 20 according to one or more embodiments described herein. The laser scanner 20 has a measuring head 22 and a base 24. The measuring head 22 is mounted on the base 24 such that the laser scanner 20 may be rotated about a vertical axis 23. In one embodiment, the measuring head 22 includes a gimbal point 27 that is a center of rotation about the vertical axis 23 and a horizontal axis 25. The measuring head 22 has a rotary mirror 26, which may be rotated about the horizontal axis 25. The rotation about the vertical axis may be about the center of the base 24. The terms vertical axis and horizontal axis refer to the scanner in its normal upright position. It is possible to operate a 3D coordinate measurement device on its side or upside down, and so to avoid confusion, the terms azimuth axis and zenith axis may be substituted for the terms vertical axis and horizontal axis, respectively. The term pan axis or standing axis may also be used as an alternative to vertical axis.

The measuring head 22 is further provided with an electromagnetic radiation emitter, such as light emitter 28, for example, that emits an emitted light beam 30. In one embodiment, the emitted light beam 30 is a coherent light beam such as a laser beam. The laser beam may have a wavelength range of approximately 300 to 1600 nanometers, for example 790 nanometers, 905 nanometers, 1550 nm, or less than 400 nanometers. It should be appreciated that other electromagnetic radiation beams having greater or smaller wavelengths may also be used. The emitted light beam 30 is amplitude or intensity modulated, for example, with a sinusoidal waveform or with a rectangular waveform. The emitted light beam 30 is emitted by the light emitter 28 onto a beam steering unit, such as mirror 26, where it is deflected to the environment. A reflected light beam 32 is reflected from the environment by an object 34. The reflected or scattered light is intercepted by the rotary mirror 26 and directed into a light receiver 36. The directions of the emitted light beam 30 and the reflected light beam 32 result from the angular positions of the rotary mirror 26 and the measuring head 22 about the axes 25 and 23, respectively. These angular positions in turn depend on the corresponding rotary drives or motors.

Coupled to the light emitter 28 and the light receiver 36 is a controller 38. The controller 38 determines, for a multitude of measuring points X, a corresponding number of distances d between the laser scanner 20 and the points X on object 34. The distance to a particular point X is determined based at least in part on the speed of light in air through which electromagnetic radiation propagates from the device to the object point X. In one embodiment the phase shift of modulation in light emitted by the laser scanner 20 and the point X is determined and evaluated to obtain a measured distance d.

The speed of light in air depends on the properties of the air such as the air temperature, barometric pressure, relative humidity, and concentration of carbon dioxide. Such air properties influence the index of refraction n of the air. The speed of light in air is equal to the speed of light in vacuum c divided by the index of refraction. In other words, *c*ₐᵢᵣ = c/ *n.* A laser scanner of the type discussed herein is based on the time-of-flight (TOF) of the light in the air (the round-trip time for the light to travel from the device to the object and back to the device). Examples of TOF scanners include scanners that measure round trip time using the time interval between emitted and returning pulses (pulsed TOF scanners), scanners that modulate light sinusoidally and measure phase shift of the returning light (phase-based scanners), as well as many other types. A method of measuring distance based on the time-of-flight of light depends on the speed of light in air and is therefore easily distinguished from methods of measuring distance based on triangulation. Triangulation-based methods involve projecting light from a light source along a particular direction and then intercepting the light on a camera pixel along a particular direction. By knowing the distance between the camera and the projector and by matching a projected angle with a received angle, the method of triangulation enables the distance to the object to be determined based on one known length and two known angles of a triangle. The method of triangulation, therefore, does not directly depend on the speed of light in air.

In one mode of operation, the scanning of the volume around the laser scanner 20 takes place by rotating the rotary mirror 26 relatively quickly about axis 25 while rotating the measuring head 22 relatively slowly about axis 23, thereby moving the assembly in a spiral pattern. In an exemplary embodiment, the rotary mirror rotates at a maximum speed of 5820 revolutions per minute. For such a scan, the gimbal point 27 defines the origin of the local stationary reference system. The base 24 rests in this local stationary reference system.

In addition to measuring a distance d from the gimbal point 27 to an object point X, the laser scanner 20 may also collect gray-scale information related to the received optical power (equivalent to the term "brightness.") The gray-scale value may be determined at least in part, for example, by integration of the bandpass-filtered and amplified signal in the light receiver 36 over a measuring period attributed to the object point X.

The measuring head 22 may include a display device 40 integrated into the laser scanner 20. The display device 40 may include a graphical touch screen 41, as shown in FIG. 1, which allows the operator to set the parameters or initiate the operation of the laser scanner 20. For example, the screen 41 may have a user interface that allows the operator to provide measurement instructions to the device, and the screen may also display measurement results.

The laser scanner 20 includes a carrying structure 42 that provides a frame for the measuring head 22 and a platform for attaching the components of the laser scanner 20. In one embodiment, the carrying structure 42 is made from a metal such as aluminum. The carrying structure 42 includes a traverse member 44 having a pair of walls 46, 48 on opposing ends. The walls 46, 48 are parallel to each other and extend in a direction opposite the base 24. Shells 50, 52 are coupled to the walls 46, 48 and cover the components of the laser scanner 20. In the exemplary embodiment, the shells 50, 52 are made from a plastic material, such as polycarbonate or polyethylene for example. The shells 50, 52 cooperate with the walls 46, 48 to form a housing for the laser scanner 20.

On an end of the shells 50, 52 opposite the walls 46, 48 a pair of yokes 54, 56 are arranged to partially cover the respective shells 50, 52. In the exemplary embodiment, the yokes 54, 56 are made from a suitably durable material, such as aluminum for example, that assists in protecting the shells 50, 52 during transport and operation. The yokes 54, 56 each includes a first arm portion 58 that is coupled, such as with a fastener for example, to the traverse 44 adjacent the base 24. The arm portion 58 for each yoke 54, 56 extends from the traverse 44 obliquely to an outer corner of the respective shell 50, 52. From the outer corner of the shell, the yokes 54, 56 extend along the side edge of the shell to an opposite outer corner of the shell. Each yoke 54, 56 further includes a second arm portion that extends obliquely to the walls 46, 48. It should be appreciated that the yokes 54, 56 may be coupled to the traverse 42, the walls 46, 48 and the shells 50, 54 at multiple locations.

The pair of yokes 54, 56 cooperate to circumscribe a convex space within which the two shells 50, 52 are arranged. In the exemplary embodiment, the yokes 54, 56 cooperate to cover all of the outer edges of the shells 50, 54, while the top and bottom arm portions project over at least a portion of the top and bottom edges of the shells 50, 52. This provides advantages in protecting the shells 50, 52 and the measuring head 22 from damage during transportation and operation. In other embodiments, the yokes 54, 56 may include additional features, such as handles to facilitate the carrying of the laser scanner 20 or attachment points for accessories for example.

On top of the traverse 44, a prism 60 is provided. The prism extends parallel to the walls 46, 48. In the exemplary embodiment, the prism 60 is integrally formed as part of the carrying structure 42. In other embodiments, the prism 60 is a separate component that is coupled to the traverse 44. When the mirror 26 rotates, during each rotation the mirror 26 directs the emitted light beam 30 onto the traverse 44 and the prism 60. Due to nonlinearities in the electronic components, for example in the light receiver 36, the measured distances d may depend on signal strength, which may be measured in optical power entering the scanner or optical power entering optical detectors within the light receiver 36, for example. In an embodiment, a distance correction is stored in the scanner as a function (possibly a nonlinear function) of distance to a measured point and optical power (generally unscaled quantity of light power sometimes referred to as "brightness") returned from the measured point and sent to an optical detector in the light receiver 36. Since the prism 60 is at a known distance from the gimbal point 27, the measured optical power level of light reflected by the prism 60 may be used to correct distance measurements for other measured points, thereby allowing for compensation to correct for the effects of environmental variables such as temperature. In the exemplary embodiment, the resulting correction of distance is performed by the controller 38.

In an embodiment, the base 24 is coupled to a swivel assembly (not shown) such as that described in commonly owned U.S. Patent No. 8,705,012 ('012), which is incorporated by reference herein. The swivel assembly is housed within the carrying structure 42 and includes a motor 138 that is configured to rotate the measuring head 22 about the axis 23. In an embodiment, the angular/rotational position of the measuring head 22 about the axis 23 is measured by angular encoder 134.

An auxiliary image acquisition device 66 may be a device that captures and measures a parameter associated with the scanned area or the scanned object and provides a signal representing the measured quantities over an image acquisition area. The auxiliary image acquisition device 66 may be, but is not limited to, a pyrometer, a thermal imager, an ionizing radiation detector, or a millimeter-wave detector. In an embodiment, the auxiliary image acquisition device 66 is a color camera.

In an embodiment, a central color camera (first image acquisition device) 112 is located internally to the scanner and may have the same optical axis as the 3D scanner device. In this embodiment, the first image acquisition device 112 is integrated into the measuring head 22 and arranged to acquire images along the same optical pathway as emitted light beam 30 and reflected light beam 32. In this embodiment, the light from the light emitter 28 reflects off a fixed mirror 116 and travels to dichroic beam-splitter 118 that reflects the light 117 from the light emitter 28 onto the rotary mirror 26. In an embodiment, the mirror 26 is rotated by a motor 136 and the angular/rotational position of the mirror is measured by angular encoder 134. The dichroic beam-splitter 118 allows light to pass through at wavelengths different than the wavelength of light 117. For example, the light emitter 28 may be a near infrared laser light (for example, light at wavelengths of 780 nm or 1250 nm), with the dichroic beam-splitter 118 configured to reflect the infrared laser light while allowing visible light (e.g., wavelengths of 400 to 700 nm) to transmit through. In other embodiments, the determination of whether the light passes through the beam-splitter 118 or is reflected depends on the polarization of the light. The digital camera 112 obtains 2D images of the scanned area to capture color data to add to the scanned image. In the case of a built-in color camera having an optical axis coincident with that of the 3D scanning device, the direction of the camera view may be easily obtained by simply adjusting the steering mechanisms of the scanner - for example, by adjusting the azimuth angle about the axis 23 and by steering the mirror 26 about the axis 25.

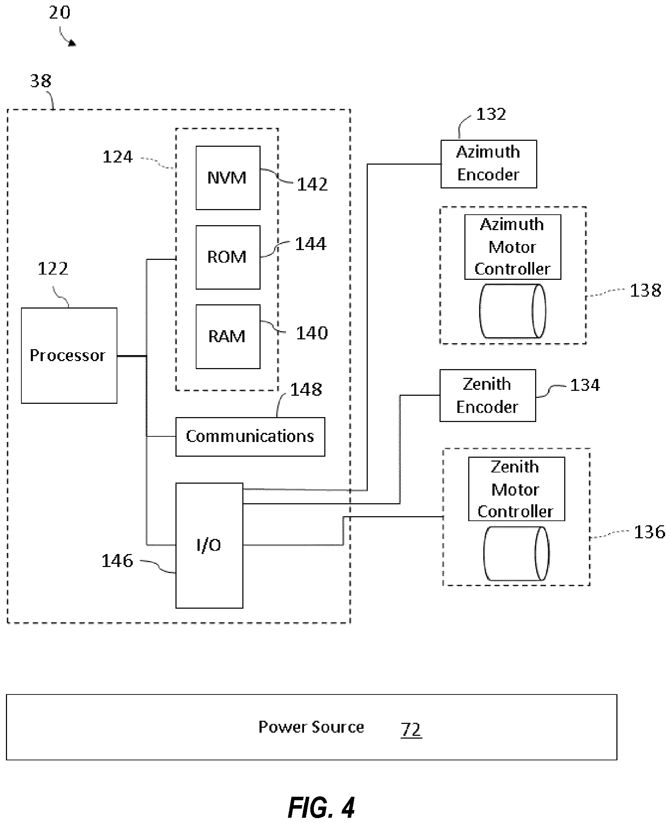

Referring now to FIG. 4 with continuing reference to FIGS. 1-3, elements are shown of the laser scanner 20. Controller 38 is a suitable electronic device capable of accepting data and instructions, executing the instructions to process the data, and presenting the results. The controller 38 includes one or more processing elements 122. The processors may be microprocessors, field programmable gate arrays (FPGAs), digital signal processors (DSPs), and generally any device capable of performing computing functions. The one or more processors 122 have access to memory 124 for storing information.

Controller 38 is capable of converting the analog voltage or current level provided by light receiver 36 into a digital signal to determine a distance from the laser scanner 20 to an object in the environment. Controller 38 uses the digital signals that act as input to various processes for controlling the laser scanner 20. The digital signals represent one or more laser scanner 20 data including but not limited to distance to an object, images of the environment, images acquired by panoramic camera 126, angular/rotational measurements by a first or azimuth encoder 132, and angular/rotational measurements by a second axis or zenith encoder 134.

In general, controller 38 accepts data from encoders 132, 134, light receiver 36, light source 28, and panoramic camera 126 and is given certain instructions for the purpose of generating a 3D point cloud of a scanned environment. Controller 38 provides operating signals to the light source 28, light receiver 36, panoramic camera 126, zenith motor 136 and azimuth motor 138. The controller 38 compares the operational parameters to predetermined variances and if the predetermined variance is exceeded, generates a signal that alerts an operator to a condition. The data received by the controller 38 may be displayed on a user interface 40 coupled to controller 38. The user interface 40 may be one or more LEDs (light-emitting diodes) 82, an LCD (liquid-crystal diode) display, a CRT (cathode ray tube) display, a touch-screen display or the like. A keypad may also be coupled to the user interface for providing data input to controller 38. In one embodiment, the user interface is arranged or executed on a mobile computing device that is coupled for communication, such as via a wired or wireless communications medium (e.g. Ethernet, serial, USB, Bluetooth^{™} or WiFi) for example, to the laser scanner 20.

The controller 38 may also be coupled to external computer networks such as a local area network (LAN) and the Internet. A LAN interconnects one or more remote computers, which are configured to communicate with controller 38 using a well- known computer communications protocol such as TCP/IP (Transmission Control Protocol/Internet Protocol), RS-232, ModBus, and the like. Additional systems may also be connected to LAN with the controllers 38 in each of these systems being configured to send and receive data to and from remote computers and other systems. The LAN may be connected to the Internet. This connection allows controller 38 to communicate with one or more remote computers connected to the Internet.

The processors 122 are coupled to memory 124. The memory 124 may include random access memory (RAM) device 140, a non-volatile memory (NVM) device 142, and a read-only memory (ROM) device 144. In addition, the processors 122 may be connected to one or more input/output (I/O) controllers 146 and a communications circuit 148. In an embodiment, the communications circuit 92 provides an interface that allows wireless or wired communication with one or more external devices or networks, such as the LAN discussed above.

Controller 38 includes operation control methods embodied in application code (e.g., program instructions executable by a processor to cause the processor to perform operations). These methods are embodied in computer instructions written to be executed by processors 122, typically in the form of software. The software can be encoded in any language, including, but not limited to, assembly language, VHDL (Verilog Hardware Description Language), VHSIC HDL (Very High Speed IC Hardware Description Language), Fortran (formula translation), C, C++, C#, Objective-C, Visual C++, Java, ALGOL (algorithmic language), BASIC (beginners all-purpose symbolic instruction code), visual BASIC, ActiveX, HTML (HyperText Markup Language), Python, Ruby and any combination or derivative of at least one of the foregoing.

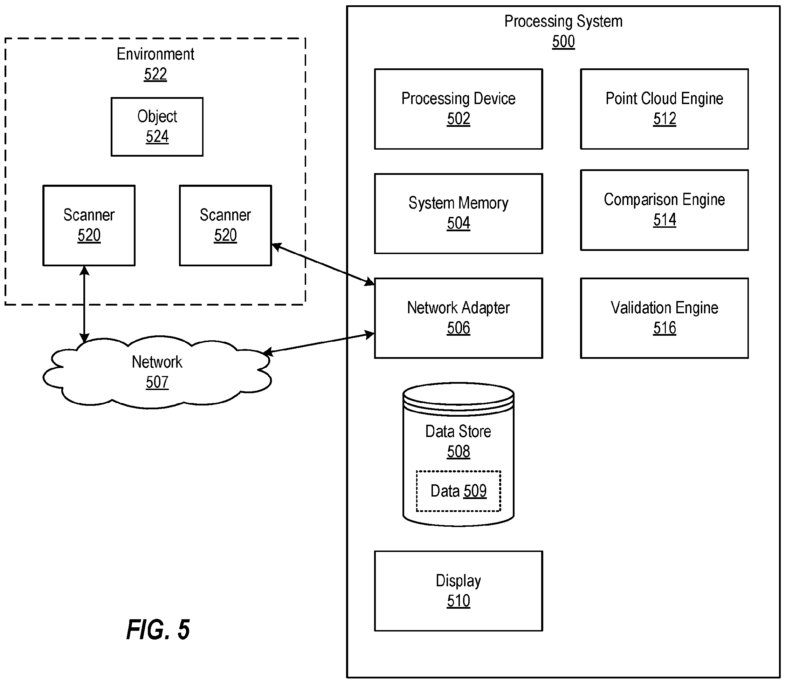

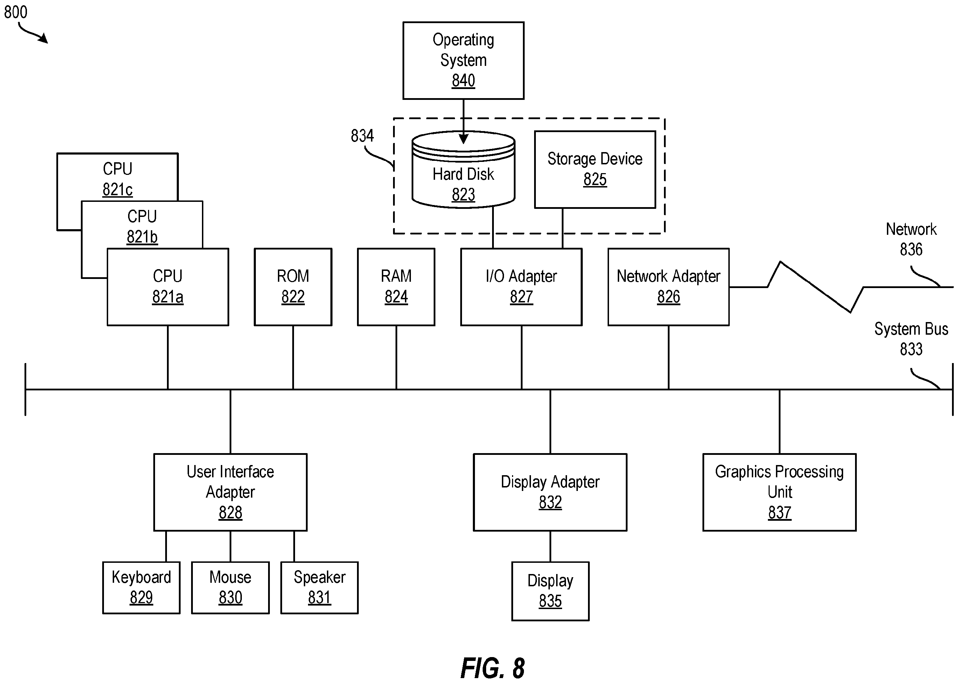

FIG. 5 is a schematic illustration of a processing system 500 for generating a point cloud-defined boundary according to one or more embodiments described herein. The processing system 500 includes a processing device 502 (e.g., one or more of the processing devices 821 of FIG. 8), a system memory 504 (e.g., the RAM 824 and/or the ROM 822 of FIG. 8), a network adapter 506 (e.g., the network adapter 826 of FIG. 12), a data store 808, a display 810, a point cloud engine 512, a comparison engine 514, and a validation engine 516.

The various components, modules, engines, etc. described regarding FIG. 5 (e.g., the point cloud engine 512, the comparison engine 514, and the validation engine 516) can be implemented as instructions stored on a computer-readable storage medium, as hardware modules, as special-purpose hardware (e.g., application specific hardware, application specific integrated circuits (ASICs), application specific special processors (ASSPs), field programmable gate arrays (FPGAs), as embedded controllers, hardwired circuitry, etc.), or as some combination or combinations of these. According to aspects of the present disclosure, the engine(s) described herein can be a combination of hardware and programming. The programming can be processor executable instructions stored on a tangible memory, and the hardware can include the processing device 502 for executing those instructions. Thus, the system memory 504 can store program instructions that when executed by the processing device 502 implement the engines described herein. Other engines can also be utilized to include other features and functionality described in other examples herein.

In one or more embodiments, one or more of the components of the processing system 500 and/or the processing system 500 itself can be implemented using distributed or cloud computing techniques. For example, a cloud computing system can be in wired or wireless electronic communication with one or more of the elements of the processing system 500. Cloud computing can supplement, support or replace some or all of the functionality of the elements of the processing system 500. Additionally, some or all of the functionality of the elements of the processing system 500 (e.g., the point cloud engine 512, the comparison engine 514, and the validation engine 516) can be implemented as a node of a cloud computing system. A cloud computing node is only one example of a suitable cloud computing node and is not intended to suggest any limitation as to the scope of use or functionality of embodiments described herein. For example, the network 507 can be a cloud network. According to one or more embodiments described herein, edge computing can be implemented, such that one or more edge devices can perform one or more of the features and/or functions of the processing system 500. For example, one or more of the scanners 520 can be an edge processing device, which can perform processing on 3D data that the scanners 520 collect (e.g., one or more of the scanners 520 can generate the point cloud-defined boundary locally).

The network adapter 506 enables the processing system 500 to transmit data to and/or receive data from other sources, such as scanners 520. For example, the processing system 500 receives data (e.g., a data set that includes a plurality of three-dimensional coordinates of an environment 522) from one or more of the scanners 520 directly and/or via a network 507. The data from one or more of the scanners 520 can be stored in the data store 508 of the processing system 500 as data 509, which can be used to generate a point cloud-defined boundary.

The network 507 represents any one or a combination of different types of suitable communications networks such as, for example, cable networks, public networks (e.g., the Internet), private networks, wireless networks, cellular networks, or any other suitable private and/or public networks. Further, the network 507 can have any suitable communication range associated therewith and may include, for example, global networks (e.g., the Internet), metropolitan area networks (MANs), wide area networks (WANs), local area networks (LANs), or personal area networks (PANs). In addition, the network 507 can include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, satellite communication mediums, or any combination thereof.

One or more scanners 520 (e.g., a laser scanner, such as the laser scanner 20) can be arranged on, in, and/or around the environment 522 to scan the environment 522. It should be appreciated that while embodiments herein refer to a 3D coordinate measurement device as a laser scanner (e.g., the scanners 520), this is for example purposes and the claims should not be so limited. In other embodiments, other types of optical or 3D coordinate measurement devices may be used, such as but not limited to triangulation scanners, structured light scanners, photogrammetry devices, mobile mapping devices, LIDAR devices, and/or the like, including combinations and/or multiples thereof, for example.

According to one or more embodiments described herein, the scanners 520 can include a scanner processing system including a scanner controller, a housing, and a 3D scanner. The 3D scanner can be disposed within the housing and operably coupled to the scanner processing system. The 3D scanner includes a light source, a beam steering unit, a first angle measuring device, a second angle measuring device, and a light receiver. The beam steering unit cooperates with the light source and the light receiver to define a scan area. The light source and the light receiver are configured to cooperate with the scanner processing system to determine a first distance to a first object point based at least in part on a transmitting of a light by the light source and a receiving of a reflected light by the light receiver. The 3D scanner is further configured to cooperate with the scanner processing system to determine 3D coordinates of the first object point based at least in part on the first distance, a first angle of rotation, and a second angle of rotation. According to one or more embodiments described herein, the processing system 500 can automatically trigger one or more of the scanners 520 to cause the triggered scanner to initiate a scan to capture the 3D data. As an example, multiple scanners can be triggered simultaneously to cause simultaneous scanning.

The scanners 520 perform at least one scan to generate a data set that includes a plurality of three-dimensional coordinates of the environment 522 and an object 524 (i.e., an object of interest) within the environment 522. The data set can be transmitted, directly or indirectly (such as via the network 507) to a processing system (such as the processing system 500), which can store the data set as the data 509 in the data store 508. It should be appreciated that other numbers of scanners (e.g., one scanner, three scanners, four scanners, six scanners, eight scanners, etc.) can be used. According to one or more embodiments described herein, one or more scanners can be used to take multiple scans. For example, one of the scanners 520 can capture first scan data at a first location and then be moved to a second location, where the one of the scanners 520 captures second scan data.

Using the data received from the scanners 520, the processing system 500 can generate a point cloud-defined boundary using the data 509 using one or more of the point cloud engine 512, the comparison engine 514, and/or the validation engine 516. For example, the point cloud engine 512 converts the 3D data (e.g., the data 509) into a point cloud representation of the object of interest, from which a point cloud-defined boundary can be generated. The comparison engine 514 can compare the point cloud to a reference point cloud (e.g., a "golden" point cloud) to improve the point cloud. For example, if the 3D data (e.g., the data 509) of the object 524 is missing any points and/or has incomplete areas (such as due to a reflection on a surface of the object 524 when one or more of the scans were performed), the point cloud may have missing areas (i.e., occlusions). By comparing the point cloud to a reference (or "golden") point cloud, which is known to be accurate, any missing areas in the point cloud can be supplemented with points from the reference point cloud. It should be appreciated that the ability to insert missing areas in the point cloud, using the reference point cloud, provides improvements in reducing the time to perform the scanning while still providing the desired boundary/buffer zone for the object as described herein.

The validation engine 516 can perform validation on the data 509, such as between scans when multiple scans are performed, to confirm whether a scan is sufficient (e.g., whether it has a desired coverage, whether it captured a desirable amount of the object 524, whether the scanner 520 is positioned correctly, and/or the like, including combinations thereof). According to one or more embodiments described herein, the validation can be performed before the generation of the point cloud-defined boundary. The features and functionality of the point cloud engine 512, the comparison engine 514, and the validation engine 516 are now described in more detail with reference to the following figures.

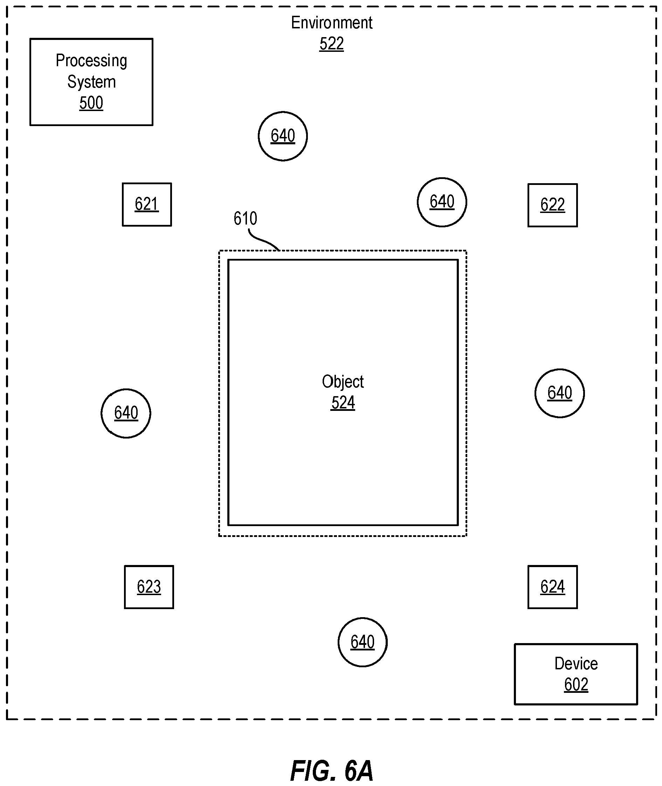

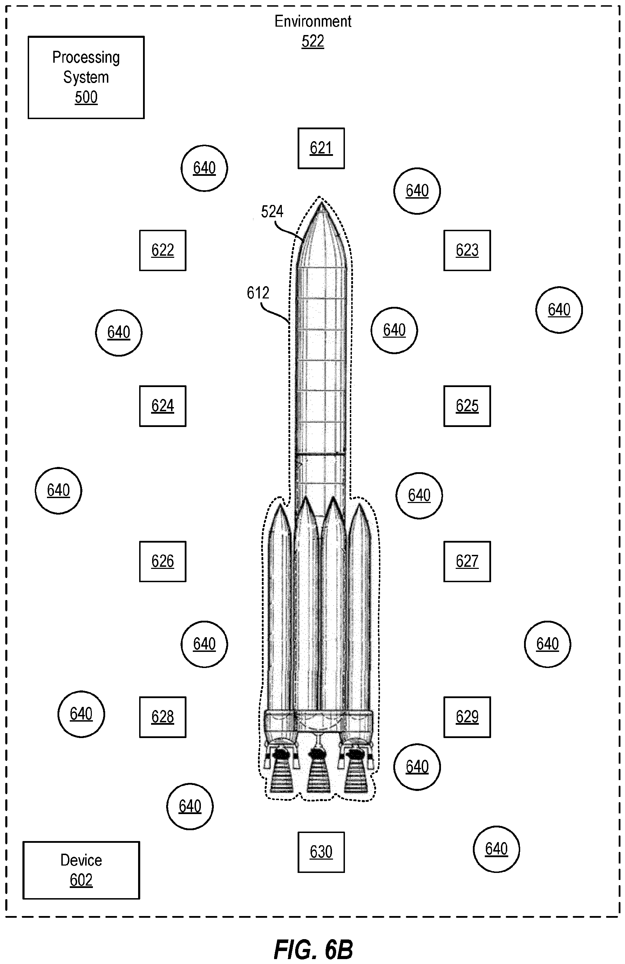

FIG. 6A is a schematic illustration of the environment 522 of FIG. 5 having the object 524 to be scanned according to one or more embodiments described herein. The environment 522 includes scan locations 621, 622, 623, 624 as shown, although any suitable number and arrangement of scan locations is possible and within the scope of the present disclosure (see, e.g., FIG. 6B, which includes ten scan locations). With continued reference to FIG. 6A, the scan locations 621-624 represent locations where a scanner, such as the scanner 520, can be positioned to capture 3D data about the object 524 and the environment 522. The scan locations 621-624 can be in an arrangement that provides complete (or near-complete) coverage for 3D data capture of the object 524. For example, the scan locations 621-624 can be at different elevations relative to a horizontal plane defined by a floor or other such surface. In an embodiment, the scan locations 621-624 may be selected to provided a desired level of scan or within a desired time period, such as by scanning areas where the object is variable or has different options for example, with the remaining portions of the point cloud being inserted from the reference point cloud.

In some examples, one scanner 520 is used. In such an example, the scanner 520 is moved to each of the scan locations 621-624 to capture 3D data. In another example, multiple scanners 520 can be implemented (e.g., two scanners, three scanners, four scanners). For example, a first scanner 520 can capture 3D data at the scan locations 621 and 623 while a second scanner 520 can capture 3D data at the scan locations 622 and 624. According to an example, each scan location 621-624 can include a scanner.

The one or more scanners 520 capture 3D data about the object 524 and transmit the 3D data to the processing system 500. Using the point cloud engine 512, the processing system 500 generates a point cloud from the 3D data captured at the scan locations 621-624 using the one or more scanners 520. The point cloud can then be used to generate the point cloud-defined boundary as described herein.

In examples, the environment 522 can include one or more markers 640, which can be captured in the 3D data. The location of the markers can be compared between scans to register the 3D data captured at the multiple scan locations 621-624. For example, a scan at the scan location 621 can capture certain of the markers 640; similarly, a scan at the location 623 can capture certain of the makers 640, where each of these two scans capture some of the same markers. In such cases, the 3D data from these scan locations can be registered.

The one or more markers 640 can also be used to validate one or more scans. For example, a first scan can be captured where at least three of the markers 640 are captured. The first scan can then be validated by evaluating the location of the markers 640 within the captured 3D data. For example, the location of the one or more markers 640 and/or the distances between pairs of the one or more markers 640 can be evaluated to determine if the scan locations are acceptable. The locations of the markers 640 can be compared to known or determined locations (from the 3D data) to validate one or more scans.

As shown in FIG. 6A, the object 524 has associated therewith a point cloud-defined boundary 610. Although the point cloud-defined boundary 610 is shown as being a distance away from a surface of the object 524, it should be appreciated that the point cloud-defined boundary 610 can be aligned with a surface(s) of the object 524 and/or can be a distance away from such surface(s) of the object 524. For example, the point cloud-defined boundary 610 can be a distance, such as 5 cm, 20 cm, etc., away from surface(s) of the object 524.

FIG. 6B is a schematic illustration of the environment 522 of FIG. 5 having the object 524 to be scanned according to one or more embodiments described herein. In this example, the object 524 is a spacecraft, but the one or more embodiments described herein can be applied to any suitable object (e.g., an automobile, a ship, an airplane, etc.), and the depiction of a spacecraft is not intended to limit the claims.

In the example of FIG. 6B, ten scan locations 621-630 are shown, although other numbers of scan locations are possible in other examples. Like in the example of FIG. 6A, the scan locations 621-630 represent locations where a scanner, such as the scanner 520, can be positioned to capture 3D data about the object 524 and the environment 522. In some examples, one scanner 520 is used. In such an example, the scanner 520 is moved to each of the scan locations 621-630 to capture 3D data. In another example, multiple scanners 520 can be implemented (e.g., two scanners, three scanners, four scanners). For example, a first scanner 520 can capture 3D data at the scan locations 621, 623, 625, 627, 629 while a second scanner 520 can capture 3D data at the scan locations 622, 624, 626, 628, 630. According to an example, each scan location 621-630 can include a scanner.

The one or more scanners 520 capture 3D data about the object 524 and transmit the 3D data to the processing system 500. Using the point cloud engine 512, the processing system 500 generates a point cloud by registering together the individual 3D data captured at the scan locations 621-624 using the one or more scanners 520. The point cloud can then be used to generate the point cloud-defined boundary as described herein. According to one or more embodiments described herein, scan registration can be performed using a bundling technique that bundles together scan data over pre-defined points using a filter that eliminates automatically a percentage of "worst" points (e.g., the bottom 10%, the bottom 25%, the bottom 40%, and the like) but keeps a minimum number (e.g., three, four, etc.) markers per scan. Worst points are points that fall below a threshold, for example.

As shown in FIG. 6B, the object 524 has associated therewith a point cloud-defined boundary 612. Although the point cloud-defined boundary 610 is shown as being a distance away from a surface of the object 524, it should be appreciated that the point cloud-defined boundary 610 can be aligned with a surface(s) of the object 524 and/or can be a distance away (i.e., off-set) from such surface(s) of the object 524. It can be observed that the point cloud-defined boundary represents the shape/outline of the object 524.

In the examples of FIGS. 6A and 6B, the object 524 is completed disposed within the environment 522; however, in other examples, the object 524 can be partially disposed within the environment 522.

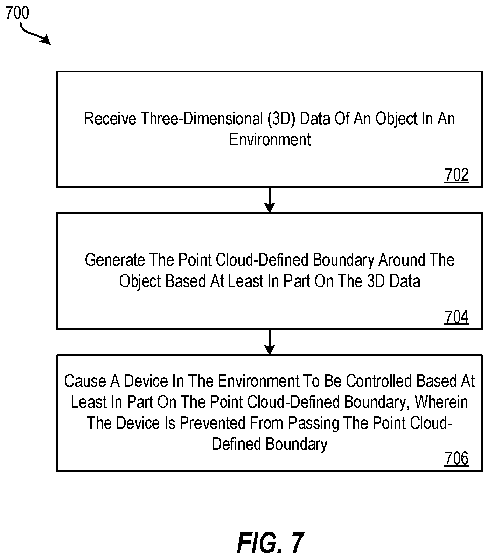

FIG. 7 is a flow diagram of a method 700 for generating a point cloud-defined boundary according to one or more embodiments described herein. The method 700 can be performed by any suitable system or device, such as the processing system 500 of FIG. 5 and/or the processing system 800 of FIG. 8.

At block 702, the processing system 500 receives 3D data (e.g., the data 509) of an object (e.g., the object 524, etc.) in an environment (e.g., the environment 522). For example, one or more of the scanners 520 captures 3D data about the object 524 and the environment 522. The 3D data are transmitted to the processing system 500 as described herein. As an example, capturing the 3D data of the object includes capturing first 3D data of the object 524 at a first location (e.g., the scan location 621) within the environment 522 and capturing second 3D data of the object 524 at a second location (e.g., the scan location 622) within the environment 522. It should be appreciated that one scanner 520 can be used to capture the first and second 3D data according to one or more embodiments described herein, or multiple scanners 520 can be used to capture the first and second 3D data according to one or more embodiments described herein. The first data and the second data can be validated, as described herein using the validation engine 516, according to one or more embodiments described herein. According to one or more embodiments described herein, the first 3D data and the second 3D data are combined to generate the 3D data of the object. In some examples, duplicate data from the 3D data can be removed. For example, the comparison engine 514 can compare the first 3D data and the second 3D data and remove points that are duplicate (e.g., within a certain distance, such as 5 mm). In some embodiments, this reduces the size of the point cloud while preserving the accuracy of the resulting point cloud.

According to one or more embodiments described herein, validating the data, using the validation engine 516, can include determining whether data corresponding to a minimum number of markers (e.g., the one or more markers 640) are present within the scan data. The presence of such markers can be used to validate one or more scans. For example, the 3D data can be checked for a minimum number of markers per scan position. In such examples, a scan may be considered valid if it has at least a minimum number of the markers (e.g., 3 markers, although other numbers of markers are also possible).

In another example, the validation engine 516 can validate the 3D data based on how many points are included in the scan. For example, a threshold number of 3D points can be set, and scans that include at least the threshold number of 3D points are considered valid, while scans lacking the threshold number of 3D points are not considered valid. As an example, the threshold number of 3D points could be several million points, although other numbers of points are also possible.

In another example, the validation engine 516 can validate the 3D data by determining whether the scan location associated with a scan (e.g., one or more of the scan locations 621, 622, 623, 624 of FIG. 6A) is correct. To do this, the validation engine 516 can perform a distance evaluation between the scan location and the one or more markers within the scan. A threshold distance can be set such that if the distance between the scan location and one of the markers, for example, does not satisfy the threshold distance, the scan is not considered valid. As an example, the threshold distance can be compared to the distance between the scan location and a single marker, the distance between the scan location and multiple markers, the distance between the scan location and an average distance for multiple makers, and/or the like including combinations and/or multiples thereof.

It should be appreciated that the one or more scanners 520, when capturing data about the object 524 also capture data about the environment 522. It may be desirable to remove the data about the environment 522, leaving the data about the object 524. To do this, according to one or more embodiments described herein, the processing system 500, using the point cloud engine 512, can define a first subset of the 3D data as being associated with the object 524. A second subset of the 3D data can be defined as being associated with the environment 522 other than the object 524 (that is, the area around the object 524). The point cloud engine 512 then generates the point cloud-defined boundary by including the first subset of the 3D data and excluding the second subset of the 3D data.

According to one or more embodiments described herein, capturing the 3D data can be performed using photogrammetry techniques. Photogrammetry is a technique for measuring objects using images, such as photographic images acquired by a digital camera for example. Photogrammetry can make 3D measurements from 2D images or photographs. When two or more images are acquired at different positions that have an overlapping field of view, common points or features may be identified on each image. By projecting a ray from the camera location to the feature/point on the object, the 3D coordinate of the feature/point may be determined using trigonometry or triangulation. In some examples, photogrammetry may be based on markers/targets (e.g., lights or reflective stickers) or based on natural features. To perform photogrammetry, for example, images are captured, such as with a camera having a sensor, such as a photosensitive array for example. By acquiring multiple images of an object, or a portion of the object, from different positions or orientations, 3D coordinates of points on the object may be determined based on common features or points and information on the position and orientation of the camera when each image was acquired. In order to obtain the desired information for determining 3D coordinates, the features are identified in two or more images. Since the images are acquired from different positions or orientations, the common features are located in overlapping areas of the field of view of the images. It should be appreciated that photogrammetry techniques are described in commonly-owned U.S. Patent 10,597,753, the contents of which are incorporated by reference herein. With photogrammetry, two or more images are captured and used to determine 3D coordinates of features (e.g., 3D data such as the data 509).

According to one or more embodiments described herein, defining the first subset of the 3D data and the second subset of the 3D data includes applying a clipping box (or multiple clipping boxes) to create a surface (or multiple surfaces) such as planes that surround the object 524 to isolate 3D data relating to the object 524. Subsequent to the isolating, a reduce point cloud operation is performed on the 3D data that relate to the object 524 to decrease point counts without sacrificing accuracy. This include removing duplicate point clouds, as described herein. For example, the operation to decrease point counts is based at least in part on a distance threshold (e.g., 3 mm, 5 mm, etc.) between points such that points within the threshold are considered duplicates, and all but one can be removed without sacrificing accuracy of the resulting point cloud. The point cloud-defined boundary can then be generated based on results of performing the reduce point operation on the 3D data relating to the object. That is, a point cloud is created that relates to the object 524 and not the environment 522, and that point cloud has a reduced number of duplicative points from the original 3D data. This provides for the resulting point cloud-defined boundary to be accurate without being unnecessarily large and keeping the points of interest.

At block 704, the processing system 500, using the point cloud engine 512, generates a point cloud-defined boundary (e.g., the point cloud-defined boundary 610, the point cloud-defined boundary 612, etc.) around the object (e.g., the object 524) based at least in part on the 3D data. According to one or more embodiments described herein, generating the point cloud-defined boundary may include forming a mesh representation of a point cloud (e.g., a surface model) based on the 3D data then form the boundary a distance off the mesh.

According to one or more embodiments described herein, prior to generating the point cloud-defined boundary, the point cloud engine 512 defines a point cloud based at least in part on the 3D data. According to one or more embodiments described herein, the point cloud-defined boundary is a threshold distance away (e.g., 1 cm, 5 cm, 8 cm, 25 cm, etc.) from points of the point cloud. This provides a buffer between the object 524 (represented by the point cloud) and the boundary.

At block 706, the processing system 500 causes a device in the environment 522 to be controlled based at least in part on the point cloud-defined boundary to prevent the device from passing the point cloud-defined boundary. For example, if the environment 522 is a paint booth or hangar for painting the object 524, the device (e.g., the device 602) could be a painting machine, robotic painting device, etc. The processing system 500 can cause the device to be controlled using the point cloud-defined boundary such that the device is prevented or inhibited from crossing the boundary. This reduces the likelihood of a collision between the object 524 and the device 602 significantly. In some examples, the device 602 is an automated guided vehicle. Such devices can be controlled using the point cloud-defined boundary to avoid the object 524 (e.g., to stay a distance away from the boundary to avoid colliding with the object 524).

Additional processes also may be included, and it should be understood that the process depicted in FIG. 7 represents an illustration, and that other processes may be added or existing processes may be removed, modified, or rearranged without departing from the scope of the present disclosure.

It is understood that one or more embodiments described herein is capable of being implemented in conjunction with any other type of computing environment now known or later developed. For example, FIG. 8 depicts a block diagram of a processing system 800 for implementing the techniques described herein. In accordance with one or more embodiments described herein, the processing system 800 is an example of a cloud computing node of a cloud computing environment. In examples, processing system 800 has one or more central processing units ("processors" or "processing resources" or "processing devices") 821a, 821b, 821c, etc. (collectively or generically referred to as processor(s) 821 and/or as processing device(s)). In aspects of the present disclosure, each processor 821 can include a reduced instruction set computer (RISC) microprocessor. Processors 821 are coupled to system memory (e.g., random access memory (RAM) 824) and various other components via a system bus 833. Read only memory (ROM) 822 is coupled to system bus 833 and may include a basic input/output system (BIOS), which controls certain basic functions of processing system 800.

Further depicted are an input/output (I/O) adapter 827 and a network adapter 826 coupled to system bus 833. I/O adapter 827 may be a small computer system interface (SCSI) adapter that communicates with a hard disk 823 and/or a storage device 825 or any other similar component. I/O adapter 827, hard disk 823, and storage device 825 are collectively referred to herein as mass storage 834. Operating system 840 for execution on processing system 800 may be stored in mass storage 834. The network adapter 826 interconnects system bus 833 with an outside network 836 enabling processing system 800 to communicate with other such systems.

A display (e.g., a display monitor) 835 is connected to system bus 833 by display adapter 832, which may include a graphics adapter to improve the performance of graphics intensive applications and a video controller. In one aspect of the present disclosure, adapters 826, 827, and/or 832 may be connected to one or more I/O busses that are connected to system bus 833 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 833 via user interface adapter 828 and display adapter 832. A keyboard 829, mouse 830, and speaker 831 may be interconnected to system bus 833 via user interface adapter 828, which may include, for example, a Super I/O chip integrating multiple device adapters into a single integrated circuit.

In some aspects of the present disclosure, processing system 800 includes a graphics processing unit 837. Graphics processing unit 837 is a specialized electronic circuit designed to manipulate and alter memory to accelerate the creation of images in a frame buffer intended for output to a display. In general, graphics processing unit 837 is very efficient at manipulating computer graphics and image processing, and has a highly parallel structure that makes it more effective than general-purpose CPUs for algorithms where processing of large blocks of data is done in parallel.

Thus, as configured herein, processing system 800 includes processing capability in the form of processors 821, storage capability including system memory (e.g., RAM 824), and mass storage 834, input means such as keyboard 829 and mouse 830, and output capability including speaker 831 and display 835. In some aspects of the present disclosure, a portion of system memory (e.g., RAM 824) and mass storage 834 collectively store the operating system 840 to coordinate the functions of the various components shown in processing system 800.

It will be appreciated that one or more embodiments described herein may be embodied as a system, method, or computer program product and may take the form of a hardware embodiment, a software embodiment (including firmware, resident software, micro-code, etc.), or a combination thereof. Furthermore, one or more embodiments described herein may take the form of a computer program product embodied in one or more computer readable medium(s) having computer readable program code embodied thereon.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description, but is only limited by the scope of the appended claims.

## Claims

1. A method for generating a point cloud-defined boundary comprising:
receiving three-dimensional (3D) data of an object in an environment; and
generating the point cloud-defined boundary around the object based at least in part on the 3D data.

2. The method of claim 1, wherein receiving the 3D data of the object comprises capturing the 3D data.

3. The method of claim 2, wherein capturing the 3D data is performed using a 3D coordinate measurement device.

4. The method of claim 3, wherein the 3D coordinate measurement device is a laser scanner.

5. The method of claim 2, wherein capturing the 3D data of the object comprises capturing first 3D data of the object at a first location within the environment and capturing second 3D data of the object at a second location within the environment.

6. The method of claim 5, further comprising validating the first 3D data prior to capturing the second 3D data.

7. The method of claim 5, further comprising:
combining the first 3D data and the second 3D data to generate the 3D data of the object; and removing any duplicate data from the 3D data based at least in part on the first 3D data and the second 3D data.

8. The method of claim 2, wherein capturing the 3D data comprises capturing, using a first 3D coordinate measurement device, first 3D data of the object at a first location within the environment and capturing, using a second 3D coordinate measurement device, second 3D data of the object at a second location within the environment.

9. The method of claim 1, further comprising validating the 3D data prior to generating the point cloud-defined boundary.

10. The method of claim 1, wherein generating the point cloud-defined boundary is further based at least in part on reference 3D data.

11. The method of claim 1, wherein:
the generating of the point cloud-defined boundary around the object further comprises:
defining a first subset of the 3D data as being associated with the object;
defining a second subset of the 3D data as being associated with the environment other than the object,
wherein the point cloud-defined boundary is defined by including the first subset of the 3D data and excluding the second subset of the 3D data; and
the defining of the first subset of the 3D data and defining the second subset of the 3D data comprises:
applying clipping box to create surfaces that surround the object to isolate 3D data relating to the object wherein the surfaces are planes;
subsequent to isolating 3D data relating to the object, performing a reduce point cloud operation on the 3D data relating to the object to decrease point counts without sacrificing accuracy, wherein the operation to decrease point counts is based at least in part on a distance threshold between points; and
generating the point cloud-defined boundary based on results of performing the reduce point operation on the 3D data relating to the object.

12. The method of claim 1, further comprising:
prior to generating the point cloud-defined boundary, defining a point cloud based at least in part on the 3D data, wherein the point cloud-defined boundary is a threshold distance away from points of the point cloud; and
causing a device in the environment to be controlled based at least in part on the point cloud-defined boundary, wherein the device is prevented from passing the point cloud-defined boundary

13. A system comprising:
a first three-dimensional (3D) coordinate measurement device to capture, at a first location of an environment, first 3D data of an object in the environment;
a second 3D coordinate measurement device to capture, at a second location of the environment, second 3D data of the object in the environment; and
a processing system comprising:
a memory comprising computer readable instructions; and
a processing device for executing the computer readable instructions, the computer readable instructions controlling the processing device to perform operations comprising:
generating a point cloud of the object based at least in part on the first 3D data and the second 3D data; and
generating a point cloud-defined boundary around the object based at least in part on the point cloud.

14. The system of claim 13, wherein the operations further comprise, prior to generating the point cloud of the object, removing duplicate data from at least one of the first 3D data or the second 3D data based at least in part on a comparison to the other of the first 3D data or the second 3D data.

15. The system of claim 13, wherein the operations further comprise:
comparing the point cloud to a reference point cloud;
updating the point cloud based at least in part on the reference point cloud; and
causing a device to be controlled in the environment based at least in part on the point cloud-defined boundary, wherein the device is prevented from passing the point cloud-defined boundary.
